# FASCICULE DE BREVET EUROPEEN

(11) **EP 0 575 263 B1**
(45) Date de publication et mention de la délivrance du brevet: **27.11.1996**
(21) Numéro de dépôt: 93420233.4
(22) Date de dépôt: 09.06.1993
(51) Int. Cl.: H02G 3/04, H02G 3/26

(54) **Goulotte pour dispositif de distribution électrique**
Rinne für elektrische Stromversorgungsvorrichtung
Raceway for electrical distribution device

(30) Priorité: 15.06.1992 FR 9207323
(43) Date de publication de la demande: 22.12.1993
(73) Titulaire: SCHNEIDER ELECTRIC SA, 92100 Boulogne Billancourt (FR)
(72) Inventeur: Grumel, Christophe, F-38050 Grenoble Cédex 09 (FR)
(74) Mandataire: Hecké, Gérard

(56) Documents cités:
- EP-A- 0 271 891
- DE-A- 2 431 834

## Description

La présente invention concerne de façon générale une goulotte pour dispositif de distribution électrique.

Un dispositif de distribution électrique est en général constitué par une goulotte horizontale, allongée et de section constante, destinée à supporter ou guider des câbles électriques, et par au moins un boitier destiné à venir se fixer latéralement le long de la goulotte.

Il est connu d'installer dans une habitation ou un local quelconque des goulottes qui longent les murs et de disposer à volonté le long de ces goulottes des boîtiers renfermant des appareillages tels que des prises électriques. On peut ainsi effectuer une installation définitive des câbles ou fils électriques d'alimentation des appareillages, ces câbles passant dans ou le long des goulottes, et fixer ensuite les appareillages à l'endroit souhaité, en un nombre souhaité, ces appareillages pouvant être aisément raccordés aux câbles qui longent les goulottes. On peut ultérieurement supprimer au moins l'un de ces appareillages ou le déplacer le long de la goulotte. Par appareillage, on entend de façon générale tous les éléments connectables, raccordés électriquement soit à des fils d'alimentation en courant électrique, soit à des câbles spéciaux permettant d'acheminer des ondes électromagnétiques, des signaux électriques quelconques analogiques ou numériques, des signaux optiques, etc ... Ces dispositifs connus sont généralement appelés "goulottes pour installations électriques". Leur application peut être industrielle, tertiaire ou domestique.

Les dispositifs connus de distribution électrique répartie présentent l'inconvénient qui réside en ce qu'il est difficile de prévoir à priori la taille d'une goulotte qui doit être installée, parce que, lorsque l'on fixe une goulotte sur un mur, on ne peut pas estimer de façon suffisamment précise la quantité de câbles qui va être logée dans cette goulotte. L'installateur est souvent amené à fixer une goulotte sur-dimensionnée afin de ne pas risquer ensuite de se retrouver avec des câbles qu'il ne peut plus installer dans la goulotte.

Un autre inconvénient réside en ce qu'il est en général nécessaire de démonter un appareillage installé le long de la goulotte lorsque l'on doit rajouter ultérieurement un câble dans la goulotte. En général, l'appareillage est fixé à l'avant de la goulotte, contre elle, et par conséquent il faut démonter cet appareillage pour accéder à l'intérieur de la goulotte afin d'y introduire le câble supplémentaire.

Un autre inconvénient réside en ce qu'il est généralement nécessaire de modifier le capot de la goulotte lorsque l'on souhaite modifier la position d'un appareillage le long de cette goulotte.

Un autre inconvénient réside en ce que les goulottes connues présentent des dimensions dans leur section transversale qui sont fixes pour un modèle de goulotte donné, et il est par conséquent nécessaire pour un installeur de disposer de plusieurs modèles différents de goulottes pour pouvoir effectuer une installation électrique de distribution électrique optimisée, c'est-à-dire dans laquelle les différentes goulottes ne sont pas sensiblement sur-dimensionnées par rapport au nombre de câbles contenus dans chacune de ces goulottes.

Un autre inconvénient réside en ce qu'il est en général nécessaire pour l'installateur d'effectuer une reprise d'usinage ou une opération similaire afin de réaliser des ouvertures ou lumières permettant de passer les câbles qui doivent être connectés à des appareillages.

Le document EP-A-271.891 divulgue une goulotte pour dispositif de distribution électrique comportant :
- une pluralité de consoles destinées à être fixées sur une paroi d'un local de façon sensiblement alignées et espacées les unes des autres, un profilé supérieur et un profilé inférieur séparés l'un de l'autre par un espace central ;
- le profilé supérieur comprenant une première paroi sensiblement verticale pour sa fixation contre lesdites consoles et une deuxième paroi se projetant vers l'avant en formant un chemin pour supporter des premiers câbles ;
- le profilé inférieur comprenant une troisième paroi sensiblement verticale pour sa fixation contre lesdites consoles et une quatrième paroi se projetant vers l'avant en formant un chemin pour supporter des deuxièmes câbles ;
- une partie d'un quelconque desdits premiers et deuxièmes câbles qui est destinée à être raccordée à un appareillage situé le long de la goulotte et s'étendant latéralement à partir dudit chemin en débouchant à l'arrière de la goulotte pour le raccordement audit appareillage ;
- et un capot avant adaptable à l'opposé des consoles aux profilés supérieur et inférieur.

Une telle goulotte possède deux parois longitudinales délimitant une lumière centrale. Toute la partie arrière est ouverte pour le passage des câbles, ce qui complique l'installation en cas de modification ultérieure de la capacité de raccordement de câbles.

Un objet de la présente invention consiste à proposer une goulotte pour dispositif de distribution électrique répartie permettant d'installer de façon plus commode des câbles dans la goulotte et permettant d'augmenter ultérieurement la capacité d'installation de câbles dans la goulotte.

Un autre objet de la présente invention consiste à proposer une telle goulotte autorisant l'adjonction d'un câble dans une installation existante sans nécessiter un démontage ou un contournement des appareillages installés le long de la goulotte.

Un autre objet de la présente invention consiste à proposer une telle goulotte dans laquelle le capot de la goulotte ne doit pas être modifié au niveau de la zone de la goulotte qui supporte un appareillage.

Un autre objet de la présente invention consiste à proposer une telle goulotte pouvant être constituée de façon économique par un nombre relativement faible de pièces différentes, ces pièces permettant toutefois de composer plusieurs hauteurs et/ou plusieurs largeurs différentes de goulottes.

Un autre objet de la présente invention consiste à proposer une telle goulotte ne nécessitant pas de reprise d'usinage pour réaliser des lumières permettant de passer les câbles qui doivent être connectés à des appareillages.

Un autre objet de la présente invention consiste à proposer une telle goulotte permettant d'installer le long de celle-ci des appareillages sans aucune contrainte de pas.

La goulotte, selon l'invention, est caractérisée en ce qu'elle comprend en outre :
- un profilé intermédiaire disposé entre lesdits profilés supérieur et inférieur, ledit profilé intermédiaire ayant une forme générale sensiblement identique à celle dudit profilé inférieur afin de supporter des troisièmes câbles, et en ce que lesdits profilés supérieur et intermédiaire ainsi que lesdits profilés intermédiaire et inférieur sont respectivement espacés l'un de l'autre de façon à former entre eux deux lumières continues sur la longueur de la goulotte,
- et des moyens de passage vers les deux lumières autorisant ladite partie d'un quelconque desdits premiers, deuxièmes et troisièmes câbles, à traverser la plus proche desdites deux lumières.

Ces objets, caractéristiques et avantages, ainsi que d'autres de la présente invention seront mieux compris lors de la description détaillée d'exemples de réalisation qui va suivre, illustrée par les figures annexées parmi lesquelles :
la figure 1 est une vue en perspective simplifiée d'une goulotte selon la présente invention ;
la figure 2 est une vue en perspective plus détaillée et éclatée de la goulotte représentée sur la figure 1 ;
la figure 3 est une vue de dessus de la goulotte de la figure 1 ;
la figure 4 est une vue en coupe transversale de la goulotte représentée sur la figure 2, la goulotte étant représentée ici de façon assemblée ; et
la figure 5 est une vue en coupe transversale partielle d'une partie supérieure d'une variante de réalisation de la goulotte selon la présente invention.

Dans l'exemple qui est représenté sur les figures, on suppose que la goulotte 1 est installée horizontalement dans un local et qu'elle est fixée contre un mur vertical 50 de ce local.

Dans la suite de la description, dans le seul but de simplifier les explications, on supposera que la goulotte 1 est ainsi installée horizontalement contre un mur vertical 50 et que, dans cette position, le terme "supérieur" indique la partie haute de la goulotte, le terme "inférieur" indique la partie basse de la goulotte, le terme "avant" indique un emplacement relativement éloigné de la surface du mur 50 et le terme "arrière" indique un emplacement relativement rapproché de la surface du mur 50. De même, les termes "vertical" et "horizontal" seront considérés par rapport à cette goulotte supposée installée horizontalement contre un mur vertical. Ces termes seront donc considérés de façon relative et non absolue.

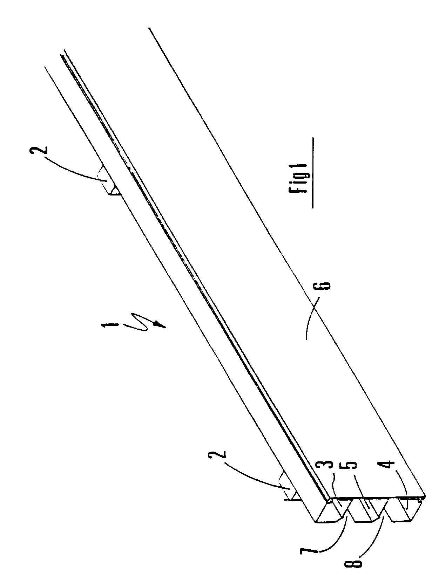

Sur la figure 1, on distingue de façon générale une goulotte assemblée qui est disposée horizontalement contre un mur vertical (non représenté) d'un local. La goulotte 1 comprend essentiellement une pluralité de consoles 2 destinées à être fixées sur une paroi d'un local (par exemple un mur vertical), un profilé supérieur 3 et un profilé inférieur 4. Les consoles 2 sont fixées au mur d'une façon sensiblement alignée et de façon régulièrement espacées. Dans l'exemple de réalisation, la goulotte comprend en outre un profilé intermédiaire 5 et un capot latéral 6. Les profilés 3, 4, 5 et le capot latéral 6 sont tous des pièces de forme allongée qui présentent une section transversale sensiblement constante sur toutes leur longueur. Les trois profilés 3, 4 et 5 sont disposés les uns au-dessus des autres, de façon parallèle et sont espacés les uns des autres de façon à former entre eux deux lumières parallèles 7, 8 s'étendant longitudinalement. Dans une variante de réalisation (non représentée), il est possible d'utiliser uniquement un profilé supérieur 3 et un profilé inférieur 4, et dans ce cas ces deux profilés sont disposés l'un au-dessus de l'autre, de façon parallèle et sont espacés l'un de l'autre afin de former entre eux une seule lumière s'étendant longitudinalement.

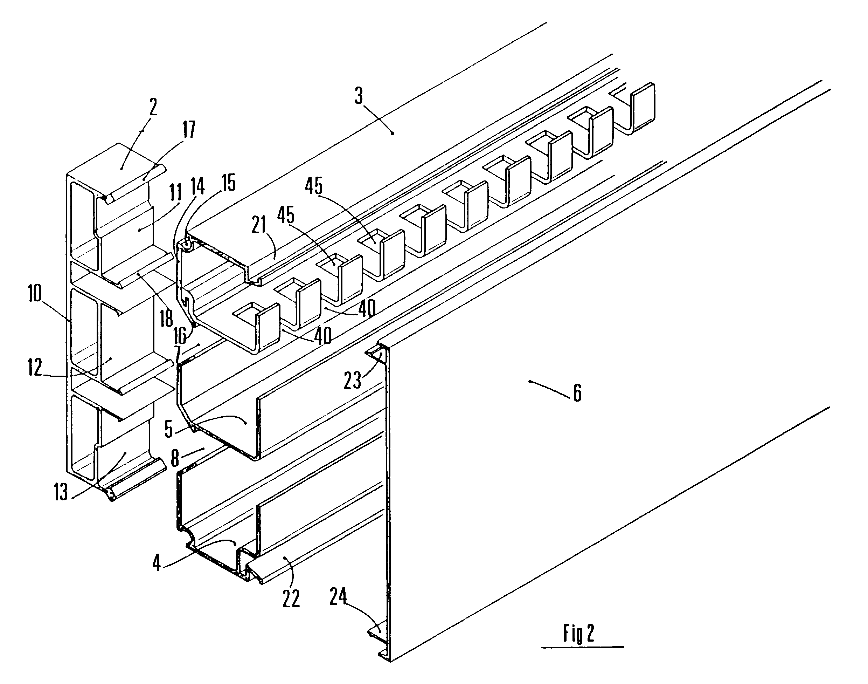

Sur la figure 2, on distingue plus en détail chacun des éléments qui constituent ensemble la goulotte. On distingue sur cette figure une seule console 2 qui présente une paroi arrière sensiblement verticale 10 qui est destinée à venir s'appliquer contre la paroi du local (par exemple un mur) sur laquelle on souhaite fixer la goulotte. A partir de cette paroi arrière 10, se projettent vers l'avant trois moyens de fixation 11, 12, 13. Chacun de ces moyens de fixation est destiné à recevoir latéralement l'un des trois profilés 3, 4 ou 5 afin que ce profilé puisse venir se fixer de façon amovible ou démontable sur ce moyen de fixation 11, 12 ou 13. Le profilé 3 comporte au niveau de sa face arrière 14 des éléments de fixation 15, 16 qui viennent s'encliqueter ou se fixer de façon amovible, par une simple pression, sur d'autres éléments de fixation 17, 18 ménagés sur la face avant du moyen de fixation 11 de la console 2. L'élément 17 peut être constitué par un bourrelet cylindrique longitudinal et l'élément 15 correspondant peut être constitué par un évidement cylindrique longitudinal comportant une ouverture latérale longitudinale, de façon à pouvoir s'emboîter par pression sur l'élément 17. L'élément 18 peut être constitué par un rebord biseauté longitudinal dont la forme en coupe transversale est celle d'un crochet en dent de scie et l'élément 16 peut avoir la forme d'un rebord longitudinal.

Le montage du profilé 3 sur le moyen de fixation 11 peut s'effectuer de la manière suivante. On commence par emboîter l'élément 15 sur l'élément 17 puis on fait tourner légèrement l'élément 3 autour de ces éléments emboîtés 15 et 17 qui forment ensemble une articulation de faible débattement, jusqu'à ce que le rebord 16 vienne glisser sur la face biseautée de l'élément 18 afin de s'enclencher ou s'encliqueter sur cet élément 18. Pour séparer ensuite le profilé 3 du moyen de fixation 11 de la console 2, il suffit d'exercer un effort de traction sur l'élément 3 de façon à déboîter le rebord 16 de l'élément 18 puis de déboîter l'élément 15 de l'élément 17. On voit que tous ces éléments 15, 16, 17, 18 peuvent présenter une forme en coupe transversale constante sur toute la longueur respectivement du profilé 3 et de la console 2. Ces éléments de fixation sont par conséquent très faciles à réaliser par moulage. Des éléments de fixation semblables sont prévus également au niveau du profilé 4 et du moyen de fixation 13, ces éléments étant agencés d'une façon symétrique par rapport à un plan horizontal. Ces éléments ne seront par conséquent pas décrits plus en détail. Des éléments d'assemblage semblables peuvent également être prévus sur le profilé intermédiaire 5 et sur le moyen de fixation 12 qui lui correspond. Cependant, dans l'exemple de réalisation, ces éléments de fixation du profilé 5 et du moyen de fixation 12 sont prévus d'une façon similaire aux éléments 16 et 18 qui sont prévus sur le profilé 3 et le moyen de fixation 11 correspondants.

On peut comprendre qu'il est possible, sans sortir du cadre de l'invention, de prévoir des moyens de fixation et des éléments de fixation de formes variées, comme cela est bien connu de l'art antérieur. Le seul critère qu'il convient de respecter ici est celui d'une fonction de fixation amovible ou démontable, de préférence une fixation par emboîtement par pression, c'est-à-dire une fixation sans organe de fixation séparé.

Le capot avant 6 se présente sous la forme générale d'une paroi sensiblement verticale. Au niveau d'un rebord supérieur avant du profilé 3, est ménagé un élément de fixation amovible 21 et au niveau d'un rebord avant inférieur du profilé inférieur 4 est ménagé un autre élément de fixation amovible 22. Un élément de fixation amovible 23 est prévu au niveau du rebord supérieur du capot 6 et l'élément 23 vient coopérer avec l'élément 21 pour assurer une fixation amovible par encliquetage ou par pression du capot 6 avec le profilé 3 et, d'une manière semblable, un élément de fixation amovible 24 est prévu au niveau du rebord inférieur du capot 6 et l'élément 24 vient coopérer avec l'élément 22 pour assurer une fixation amovible par encliquetage ou par pression du capot 6 avec le profilé 4.

Pour installer une goulotte selon la présente invention, il convient de commencer par fixer rigidement des consoles le long d'un mur ou d'une autre paroi quelconque d'un local, les consoles 2 étant sensiblement alignées et espacées régulièrement les unes des autres, puis d'encliqueter le profilé supérieur 3, le profilé inférieur 4 et le profilé intermédiaire 5 respectivement sur les moyens de fixation correspondants 11, 13 et 12 qui sont prévus sur chaque console 2.

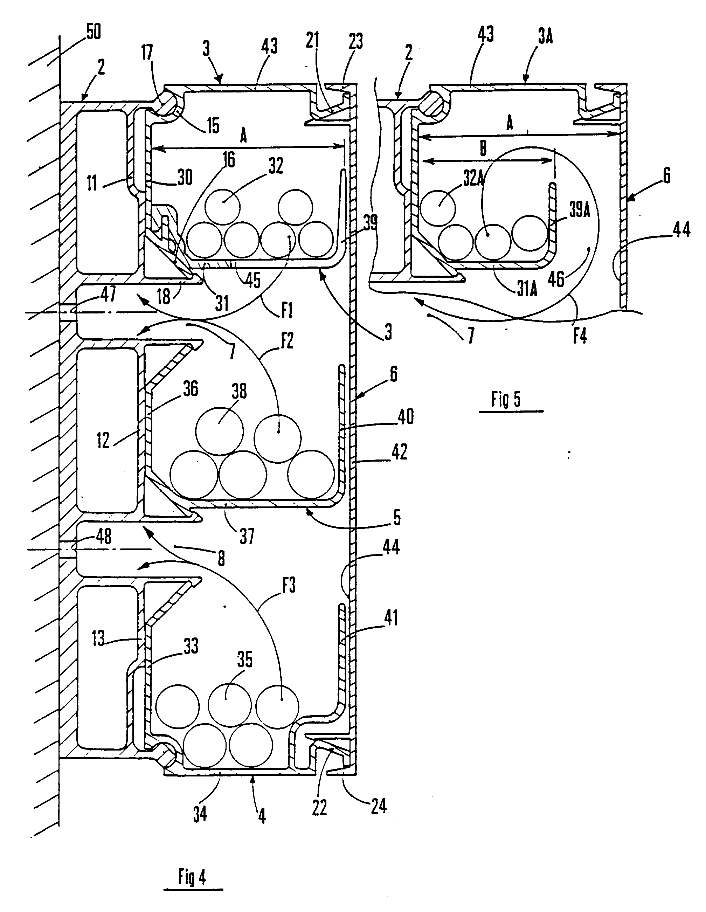

Sur la figure 4, on distingue plus en détail les différentes parties de la goulotte selon l'invention. Le profilé supérieur 3 comprend essentiellement une première paroi 30 sensiblement verticale permettant de supporter les éléments de fixation 15, 16 afin de fixer de façon amovible le profilé 3 sur la console 2. Le profilé 3 comporte en outre une deuxième paroi 31 sensiblement horizontale, inférieure et se projetant vers l'avant à partir de la première paroi 30, afin de constituer un chemin pour supporter des premiers câbles 32. Le profilé inférieur 4 comprend une troisième paroi 33 sensiblement verticale pour sa fixation sur la console 2 et une quatrième paroi 34 sensiblement horizontale, inférieure et se projetant vers l'avant à partir de la troisième paroi 33 afin de constituer un chemin pour supporter des deuxièmes câbles 35. Le profilé intermédiaire 5 comprend une cinqième paroi 36 sensiblement verticale pour sa fixation sur la console 2 et une sixième paroi 37 sensiblement horizontale, inférieure et se projetant vers l'avant à partir de la cinqième paroi 36 afin de constituer un chemin pour supporter des troisièmes câbles 38.

De préférence, la deuxième paroi 31, la quatrième paroi 34 et la sixième paroi 37 comportent chacune au niveau de son bord avant un rebord dirigé vers le haut 39, 40, 41 qui permet de retenir vers l'avant les câbles 32, 35, 38 afin que ceux-ci soient relativement guidés latéralement afin de s'étendre longitudinalement dans la goulotte. Le profilé supérieur 3 comporte en outre une huitième paroi 43 sensiblement horizontale, supérieure et s'étendant vers l'avant à partir de la première paroi 30. Si la largeur A de la paroi sensiblement horizontale 31 est sensiblement égale à la largeur A de la paroi sensiblement horizontale supérieure 43, lorsque le capot 6 est monté latéralement en venant se fixer au niveau du rebord avant 23 de la paroi supérieure 43, la face intérieure 44 du capot 6 vient toucher ou vient à proximité de l'extrémité avant 39 de la paroi inférieure 31. 11 résulte de cela que le profilé supérieur 3 définit, lorsque le capot 6 est monté, un volume interne sensiblement fermé dans lequel peuvent s'étendre les câbles 32.

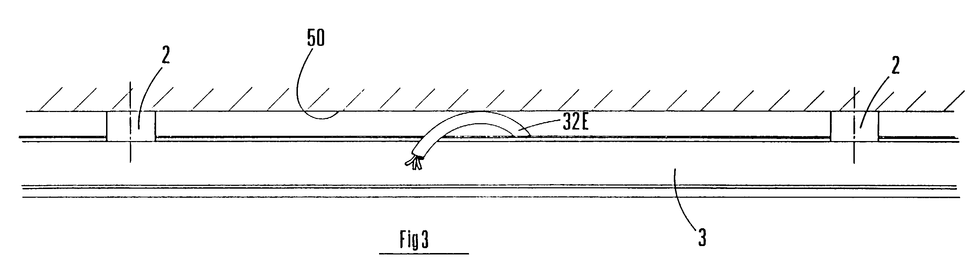

Selon le mode de réalisation représenté sur les figures 2 à 4, la deuxième paroi 31 du profilé 3 comprend une pluralité d'encoches 45 ouvertes au niveau de son bord avant 39 afin de laisser passer au travers (flèche F1) de l'une quelconque de ces encoches 45, du haut vers le bas, une partie 32E d'un quelconque desdits premiers câbles 32 qui est destinée à être raccordée à un appareillage (non représenté) situé latéralement à proximité de la goulotte. Sur la figure 4, la flèche F1 indique le chemin que peut suivre une telle extrémité de câble 32E lorsqu'elle provient d'un des câbles 32. On voit que l'extrémité de câble 32E traverse vers le bas la paroi 31 en passant dans une encoche 45, puis traverse la lumière 7 et débouche enfin à l'arrière de la goulotte. Sur la figure 3, on voit une telle partie 32E qui débouche à l'arrière de la goulotte 1 afin d'être raccordée à un appareillage électrique (non représenté) situé latéralement à proximité de la goulotte.

Une extrémité d'un des câbles 35 peut passer directement, par en-dessus au travers de la lumière 7, comme représenté par la flèche F2. D'une façon semblable, une extrémité d'un des câbles 38 peut passer directement, par en-dessus au travers de la lumière 8, comme représenté par la flèche F3.

En fait, ladite partie 32E d'un quelconque desdits premiers câbles 32 ou 32A, deuxièmes câbles 35 et troisièmes câbles 38 qui est destinée à être raccordée à un appareillage traverse la plus proche des deux lumières 7 ou 8.

Les consoles 2 sont en outre munies de trous 47, 48 pour le passage de vis pour la fixationdes consoles à une paroi 50 du local. Ces trous sont disposés au niveau de la ou des lumières 7, 8 de telle sorte que l'on puisse accéder directement aux vis (non représentées) en passant un outil au travers de la ou des lumières 7, 8.

Sur la figure 5, on distingue une variante dans laquelle la deuxième paroi 31A du profilé 3A a une largeur B inférieure à celle A de ladite cinqième paroi 43A du profilé 3A, de façon à laisser un espace 46 entre le bord avant 39A de la deuxième paroi 31A et la face interne 44 du capot 6, afin de laisser passer au travers de cet espace 46, du haut vers le bas (flèche F4), la partie 32E d'un quelconque des premiers câbles 32A qui est destinée à être raccordée à un appareillage (non représenté) situé latéralement à proximité de la goulotte.

On voit donc que la goulotte pour dispositif de distribution électrique, selon l'invention, permet d'installer de façon plus commode des câbles dans la goulotte, du fait que tout l'avant de la goulotte est dégagé quand le capot 6 est oté, et permet d'installer ultérieurement des câbles supplémentaires dans la goulotte. On peut en effet rajouter un câble dans une installation existante sans nécessiter un démontage ou un contournement des appareillages installés le long de la goulotte, du fait que les appareillages ne sont pas disposés à l'avant de la goulotte mais sont disposés au-dessus ou au-dessous de la goulotte. Ces appareillages ne gênent donc pas l'accès à l'intérieur de la goulotte puisque cet intérieur de goulotte est complètement dégagé latéralement lorsque le capot 6 est oté. Les parties 32E des câbles peuvent déboucher latéralement de la goulotte, en passant au travers d'une des lumières 7 ou 8 qui sont longitudinales et continues, sans contrainte de pas, c'est-à-dire que la partie 32E peut déboucher n'importe où le long de la goulotte et non en des endroits précis espacés d'un certain pas. En fait, on peut dire qu'un aspect de l'invention réside dans le fait que la goulotte est constituée par l'ensemble profilés et consoles qui permet de former au moins une lumière continue de façon aisée, économique et modulaire.

On constate aussi que le capot 6 de la goulotte ne doit pas être modifié au niveau de la zone de la goulotte qui supporte un appareillage.

On peut d'autre part réaliser une telle goulotte de façon économique en utilisant un nombre relativement faible de pièces différentes. C'est ainsi que l'on peut réaliser un jeu de pièces pour goulotte, ce jeu incluant des consoles identiques 2, des capots identiques 6, des profilés 3, 4 et 5 ayant plusieurs largeurs A différentes et des pièces 31A ayant aussi plusieurs largeurs B différentes. Avec ce jet de pièces, un installateur peut agencer de façon optimum une installation de distribution électrique répartie et peut par la suite modifier facilement cette installation.

## Revendications

1. Goulotte pour dispositif de distribution électrique comportant :
- une pluralité de consoles (2) destinées à être fixées sur une paroi d'un local de façon sensiblement alignées et espacées les unes des autres, un profilé supérieur (3) et un profilé inférieur (4) séparés l'un de l'autre par un espace central ;
- le profilé supérieur (3) comprenant une première paroi sensiblement verticale (30) pour sa fixation contre lesdites consoles (2) et une deuxième paroi (31) se projetant vers l'avant en formant un chemin pour supporter des premiers câbles (32) ;
- le profilé inférieur (4) comprenant une troisième paroi (33) sensiblement verticale pour sa fixation contre lesdites consoles (2) et une quatrième paroi (34) se projetant vers l'avant en formant un chemin pour supporter des deuxièmes câbles (35) ;
- une partie (32E) d'un quelconque desdits premiers et deuxièmes câbles (32, 35) qui est destinée à être raccordée à un appareillage situé le long de la goulotte (1) et s'étendant latéralement à partir dudit chemin (31 ; 34) en débouchant à l'arrière de la goulotte pour le raccordement audit appareillage ;
- et un capot (6) avant adaptable à l'opposé des consoles 2 aux profilés supérieur (3) et inférieur (4), caractérisée en ce que la goulotte (1) comprend en outre :
- un profilé intermédiaire (5) disposé entre lesdits profilés supérieur (3) et inférieur (4) , ledit profilé intermédiaire ayant une forme générale sensiblement identique à celle dudit profilé inférieur (3) afin de supporter des troisièmes câbles (38), et en ce que lesdits profilés supérieur (3) et intermédiaire (5) ainsi que lesdits profilés intermédiaire (5) et inférieur (4) sont respectivement espacés l'un de l'autre de façon à former entre eux deux lumières continues (7, 8) sur la longueur de la goulotte (1),
- et des moyens de passage vers les deux lumières (7,8) autorisant ladite partie (32E) d'un quelconque desdits premiers, deuxièmes et troisièmes câbles à traverser la plus proche desdites deux lumières (7, 8).

2. Goulotte selon la revendication 1, caractérisée en ce que ledit profilé supérieur (2) comporte en outre une cinquième paroi (43) sensiblement horizontale, supérieure et se projetant vers l'avant, ayant une largeur (A) sensiblement égale à celle (A) de ladite quatrième paroi, et que le capot (6) vertical est équipé d'un bord supérieur (23) relié de façon amovible au bord avant (21) de ladite cinquième paroi (43) et, d'un bord inférieur (24) relié de façon amovible au bord avant (22) de ladite quatrième paroi (34).

3. Goulotte selon la revendication 2, caractérisée en ce que ladite deuxième paroi (31A) a une largeur (B) inférieure à celle (A) de ladite cinqième paroi (43) de façon à laisser un espace (46) entre le bord avant (39A) de la deuxième paroi et la face interne (44) dudit capot (6) pour constituer lesdits moyens de passage.

4. Goulotte selon la revendication 2, caractérisée en ce que ladite deuxième paroi (31) comprend une pluralité d'encoches (45) ouvertes au niveau de son bord avant (39) pour constituer lesdits moyens de passage.

5. Goulotte selon l'une quelconque des revendications précédentes, caractérisée en ce qu'au moins l'un desdits profilés (3, 4, 5) possède au niveau du bord avant de la paroi inférieure (31, 34, 37) un rebord relevé (39, 40, 41), de telle sorte que les câbles (32, 35, 38) qui sont posés sur cette paroi soient retenus latéralement de part et d'autre.

6. Goulotte selon l'une quelconque des revendications précédentes, caractérisée en ce que les consoles (2) sont munies de trous (47, 48) pour le passage de vis de fixation, ces trous (47, 48) étant disposés au niveau desdites lumières (7, 8) de telle sorte que l'on puisse accéder directement aux vis en passant un outil au travers de ladite ou desdites lumières (7, 8).

## Patentansprüche

1. Kabelführungskanal für Elektroverteilung mit
- mehreren, annähernd fluchtend und im Abstand auf einer Wand eines Raums zu befestigenden Haltestegen (2), einem oberen Führungsprofil (3) und einem unteren Führungsprofil (4), welche durch einen Mittelabstand voneinander getrennt sind, wobei
- das obere Führungsprofil (3) eine erste, annähernd senkrechte Wand (30) zu seiner Befestigung auf den genannten Stegen (2) sowie eine zweite, eine Aufnahmerinne für erste Kabel (32) bildende, nach vorn springende Wand (31) aufweist,
- das untere Führungsprofil (4) eine dritte, annähernd senkrechte Wand (33) zu seiner Befestigung auf den genannten Stegen (2) sowie eine vierte, eine Aufnahmerinne für zweite Kabel (35) bildende, nach vorn springende Wand (34) aufweist,
- ein, an ein längs des Kabelführungskanals (1) montiertes Gerät anzuschließender Abschnitt (32E) irgendeines der genannten ersten und zweiten Kabel (32, 35) zum Anschluß an das genannte Gerät seitlich von der genannten Aufnahmerinne (31; 34) weg bis an die Rückseite des Kabelführungskanals geführt ist,
- sowie einem, gegenüber den Haltestegen (2) auf das obere Führungsprofil (3) sowie das untere Führungsprofil (4) aufsteckbaren vorderen Verschlußdeckel (6), dadurch gekennzeichnet, daß der Kabelführungskanal (1) des weiteren
- ein zwischen dem genannten oberen Führungsprofil (3) und dem genannten unteren Führungsprofil (4) angeordnetes Zwischen-Führungsprofil (5) aufweist, wobei das genannte Zwischen-Führungsprofil zur Aufnahme von dritten Kabeln (38) eine im wesentlichen mit der Form des genannten unteren Führungsprofils (4) identische Form aufweist, und daß das genannte obere Führungsprofil (3) und das genannte Zwischen-Führungsprofil (5) bzw. das genannte Zwischen-Führungsprofil (5) und das genannte untere Führungsprofil (4) jeweils im Abstand zueinander angeordnet sind, derart daß zwischen ihnen zwei durchgehende, über die Länge des Kabelführungskanals (1) verlaufende Spalte (7, 8) gebildet werden,
- sowie auf die beiden Spalte (7, 8) gerichtete Durchführungsmittel umfassen, die es ermöglichen, den genannten Abschnitt (32E) irgendeines der genannten ersten, zweiten und dritten Kabel durch den nächstgelegenen der beiden genannten Spalte (7, 8) hindurchzuführen.

2. Kabelführungskanal nach Anspruch 1, dadurch gekennzeichnet, daß das genannte obere Führungsprofil (3) des weiteren eine obere, annähernd waagerechte und nach vorn springende fünfte Wand (43) aufweist, deren Breite (A) annähernd der Breite (A) der genannten vierten Wand entspricht, und daß der senkrechte Verschlußdeckel (6) einen oberen Rand (23) aufweist, der lösbar mit dem vorderen Rand (21) der genannten fünften Wand (43) verbunden ist, sowie einen unteren Rand (24) aufweist, der lösbar mit dem vorderen Rand (22) der genannten vierten Wand (34) verbunden ist.

3. Kabelführungskanal nach Anspruch 2, dadurch gekennzeichnet, daß die Breite (B) der genannten zweiten Wand (31A) geringer ist als die Breite (A) der genannten fünften Wand (43), derart daß zwischen dem vorderen Rand (39A) der zweiten Wand und der Innenseite (44) des genannten Verschlußdeckels (6) ein Abstand (46) zur Bildung der genannten Durchführungsmittel verbleibt.

4. Kabelführungskanal nach Anspruch 2, dadurch gekennzeichnet, daß die genannte zweite Wand (31) zur Bildung dieser Durchführungsmittel mehrere, zu ihrem vorderen Rand (39) hin offene Aussparungen (45) aufweist.

5. Kabelführungskanal nach irgendeinem der vorhergehenden Ansprüche, dadurch gekennzeichnet, daß mindestens eines der genannten Führungsprofile (3, 4, 5) am vorderen Rand der unteren Wand (31, 34, 37) eine hochgezogene Kante (39, 40, 41) aufweist, derart daß die auf diese Wand aufgelegten Kabel (32, 35, 38) seitlich auf beiden Seiten gehalten werden.

6. Kabelführungskanal nach irgendeinem der vorhergehenden Ansprüche, dadurch gekennzeichnet, daß die Haltestege (2) Öffnungen (47, 48) zur Durchführung von Befestigungsschrauben aufweisen, wobei diese Öffnungen (47, 48) in Höhe der genannten Spalte (7, 8) angeordnet sind, derart daß mit Hilfe eines durch den Spalt bzw. die Spalte (7, 8) hindurchgeführten Werkzeugs ein direkter Zugang zu den Schrauben möglich ist.

## Claims

1. A trunking for an electrical distribution device comprising :
- a plurality of consoles (2) designed to be fixed onto a wall of a room in a manner appreciably aligned and spaced apart from one another, an upper profiled section (3) and a lower profiled section (4) separated from one another by a central space ;
- the upper profiled section (3) comprising a first appreciably vertical wall (30) for fixing it against said consoles (2) and a second wall (31) projecting frontwards forming a path to support first cables (32) ;
- the lower profiled section (4) comprising a third appreciably vertical wall (33) for fixing it against said consoles (2) and a fourth wall (34) projecting frontwards forming a path to support second cables (35) ;
- a part (32E) of any one of said first and second cables (32, 35) which is designed to be connected to a switchgear device situated along the trunking (1) and extending laterally from said path (31 ; 34) opening out at the rear of the trunking for connection to said switchgear device ;
- and a front cover (6) fitting opposite the consoles 2 onto the upper (3) and lower profiled sections (4), characterized in that the trunking (1) in addition comprises :
- an intermediate profiled section (5) located between said upper (3) and lower profiled sections (4), said intermediate profiled section having a general shape appreciably identical to that of said lower profiled section (3) in order to support third cables (38), and in that said upper (3) and intermediate profiled sections (5) and said intermediate (5) and lower profiled sections (4) are respectively spaced apart from one another in such a way as to form between them two continuous apertures (7, 8) over the length of the trunking (1),
- and means of passage to the two apertures (7, 8) enabling said part (32E) of any one of said first, second and third cables to pass through the nearer of said two apertures (7, 8).

2. The trunking according to claim 1, characterized in that said upper profiled section (3) in addition comprises an appreciably horizontal upper fifth wall (43) projecting frontwards, having a width (A) appreciably equal to that (A) of said fourth wall, and that the vertical cover (6) is equipped with an upper edge (23) removably joined to the front edge (21) of said fifth wall (43) and with a lower edge (24) removably joined to the front edge (22) of said fourth wall (34).

3. The trunking according to claim 2, characterized in that said second wall (31A) has a width (B) smaller than that (A) of said fifth wall (43) so as to leave a space (46) between the front edge (39A) of the second wall and the internal face (44) of said cover (6) to form said means of passage.

4. The trunking according to claim 2, characterized in that said second wall (31) comprises a plurality of open notches (45) at the level of its front edge (39) to form said means of passage.

5. The trunking according to any one of the above claims, characterized in that at least one of said profiled sections (3, 4, 5) has at the level of the front edge of the lower wall (31, 34, 37) a raised edge (39, 40, 41), in such a way that the cables (32, 35, 38) which are laid on this wall are held laterally on both sides.

6. The trunking according to any one of the above claims, characterized in that the consoles (2) are provided with holes (47, 48) for the passage of fixing screws, these holes (47, 48) being located at the level of said apertures (7, 8) in such a way that the screws can be accessed directly by passing a tool through said aperture or apertures (7, 8).
